# EUROPEAN PATENT APPLICATION

(11) **EP 4 712 588 A1**
(43) Date of publication of application: **18.03.2026**
(21) Application number: 24807473.4
(22) Date of filing: 10.05.2024
(51) Int. Cl.: H04W 52/02, H04W 76/28, H04W 48/10, H04W 24/08, H04W 68/02

(54) **METHOD AND APPARATUS FOR TRANSMITTING AND RECEIVING SIGNALS IN WIRELESS COMMUNICATION SYSTEM**

(30) Priority: 12.05.2023 KR 20230061659; 10.08.2023 KR 20230104816; 04.04.2024 KR 20240046258
(71) Applicant: LG Electronics Inc., Yeongdeungpo-gu Seoul 07336 (KR)
(72) Inventor: LEE, Sunghoon, Seoul 06772 (KR); KIM, Jaehyung, Seoul 06772 (KR); YANG, Suckchel, Seoul 06772 (KR); CHOI, Seunghwan, Seoul 06772 (KR); LEE, Youngdae, Seoul 06772 (KR)
(74) Representative: Plasseraud IP
(86) International application number: PCT/KR2024/006385
(87) International publication number: WO 2024/237600

(57) **Abstract**

A method for a terminal to receive a signal in a wireless communication system according to an embodiment of the present disclosure may comprise the steps of: receiving system information including a configuration related to a wake-up signal (WUS) through a first reception operation; and determining, on the basis of the system information, whether to perform monitoring of the WUS through a second reception operation that consumes less power than the first reception operation, wherein the configuration related to the WUS may include information about the waveform of the WUS

## Description

### TECHNICAL FIELD

The present disclosure relates to a wireless communication system, and more particularly, to a method and apparatus for transmitting and receiving an uplink/downlink signal.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method and apparatus for transmitting or receiving a signal more accurately and efficiently in a wireless communication system.

Other technical objects may be derived from embodiments disclosed in the detailed description.

### TECHNICAL SOLUTION

A method of receiving a signal by a user equipment (UE) in a wireless communication system may include receiving system information including a configuration related to a wake-up signal (WUS) through a first reception operation, and determining whether to perform monitoring of the WUS through a second reception operation consuming lower power than the first reception operation, based on the system information. The configuration related to the WUS may include information about a waveform of the WUS.

The configuration related to the WUS may include at least one of information about time and frequency resources of the WUS or information about activation/deactivation of the WUS.

The system information may further include a configuration related to a second synchronization signal for synchronization in the second reception operation.

The second synchronization signal may be configured differently from a first synchronization signal for synchronization in the first reception operation.

A position of the second synchronization signal may be determined based on a position of a synchronization signal block (SSB) including the first synchronization signal.

Based on operating in a radio resource control (RRC) idle/inactive state, the UE may autonomously determine whether to perform monitoring of the WUS.

The UE may perform a random access procedure to request transmission of the WUS to a network, based on determining to perform monitoring of the WUS.

Whether the UE has to monitor the WUS during an RRC connected state, may be explicitly configured through network signaling.

Whether to monitor the WUS through the second reception operation may be determined, based on quality of a signal measured through the first reception operation.

The signal measured through the first reception operation may include at least one of a first synchronization signal for synchronization in the first reception operation or a second synchronization signal for synchronization in the second reception operation.

According to another aspect, a computer-readable recording medium having a program recorded thereon for performing the above method may be provided.

According to another aspect, an apparatus for wireless communication may include a memory configured to store instructions, and a processor configured to perform operations by executing the instructions. The operations of the processor may include receiving system information including a configuration related to a WUS through a first reception operation, and determining whether to perform monitoring of the WUS through a second reception operation consuming lower power than the first reception operation, based on the system information. The configuration related to the WUS may include information about a waveform of the WUS.

The apparatus may further include a first receiver configured to perform the first reception operation, and a second receiver configured to perform the second reception operation.

The apparatus may be a UE operating in a wireless communication system or a processing device controlling the UE.

According to another aspect, a method of transmitting a signal by a base station (BS) in a wireless communication system may include determining a configuration related to a WUS for supporting a second reception operation consuming lower power than a first reception operation of a UE, transmitting system information including the configuration related to the WUS, and transmitting the WUS based on the configuration related to the WUS. The configuration related to the WUS may include information about a waveform of the WUS.

According to another aspect, a BS for wireless communication may include a memory configured to store instructions, and a processor configured to perform operations by executing the instructions. The operations of the processor may include determining a configuration related to a WUS for supporting a second reception operation consuming lower power than a first reception operation of a UE, transmitting system information including the configuration related to the WUS, and transmitting the WUS based on the configuration related to the WUS. The configuration related to the WUS may include information about a waveform of the WUS.

### ADVANTAGEOUS EFFECTS

According to an embodiment, a signal may be transmitted/received more accurately and more efficiently in a wireless communication system.

Other technical effects may be derived from embodiments disclosed in the detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink control channel (PDCCH) transmission and reception process.
FIG. 6 illustrates an exemplary physical downlink shared channel (PDSCH) reception and acknowledgement/negative acknowledgement (ACK/NACK) transmission process.
FIG. 7 illustrates an exemplary physical uplink shared channel (PUSCH) transmission process.
FIGS. 8 to 10 are diagrams illustrating a discontinuous reception (DRX) related operation.
FIG. 11 is a diagram illustrating a wake-up signal (WUS).
FIG. 12 is a diagram illustrating operations of a network and a user equipment (UE) according to an embodiment.
FIG. 13 is a flowchart illustrating a method of receiving a signal by a UE in a wireless communication system according to an embodiment.
FIG. 14 is a flowchart illustrating a method of transmitting a signal by a base station (BS) in a wireless communication system according to an embodiment.
FIGS. 15 to 18 illustrate an example of a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

The term "base station" used in this specification may be replaced with terms such as a fixed station, Node B, gNode B (gNB), access point (AP), cell, or transmission and reception point (TRP). The term "relay" may be replaced with terms such as a relay node (RN) or relay station. In addition, the term "terminal" may be replaced with terms such as a user equipment (UE), mobile station (MS), mobile subscriber station (MSS), or subscriber station (SS).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

### 3GPP LTE

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

### Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission
- LP-WUS: Low Power Wake-Up Signal
- LP-WUR : Low-Power Wake-Up Receiver
- LP-SS : Low-Power Synchronization Signal
- XR : Abbreviation for eXtended Reality. VR(virtual reality), AR(augmented reality), MR(mixed reality)
- RRM : Radio Resource Management

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

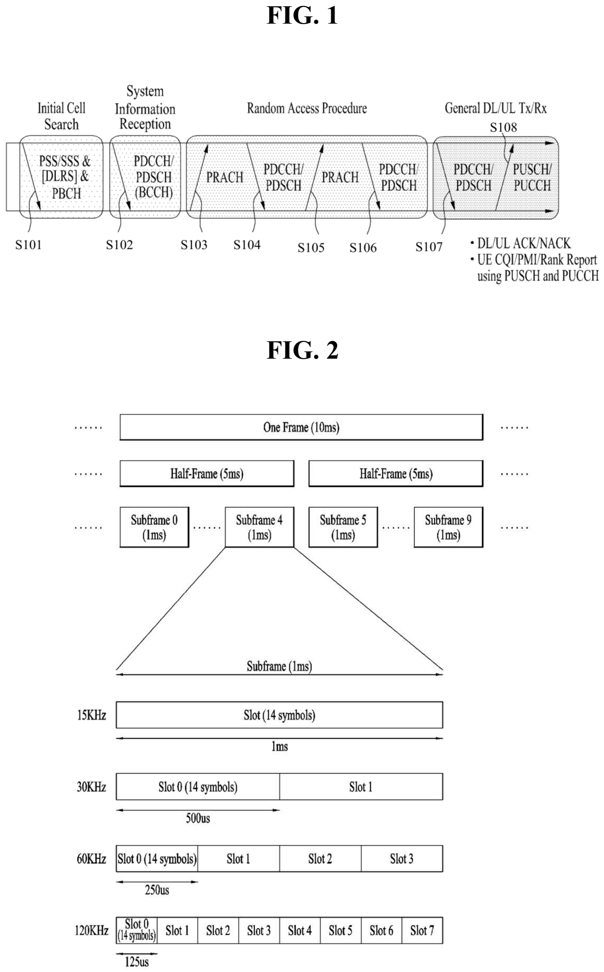

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: Number of symbols in a slot * N^{frame,u}ₛₗₒₜ: Number of slots in a frame * N^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

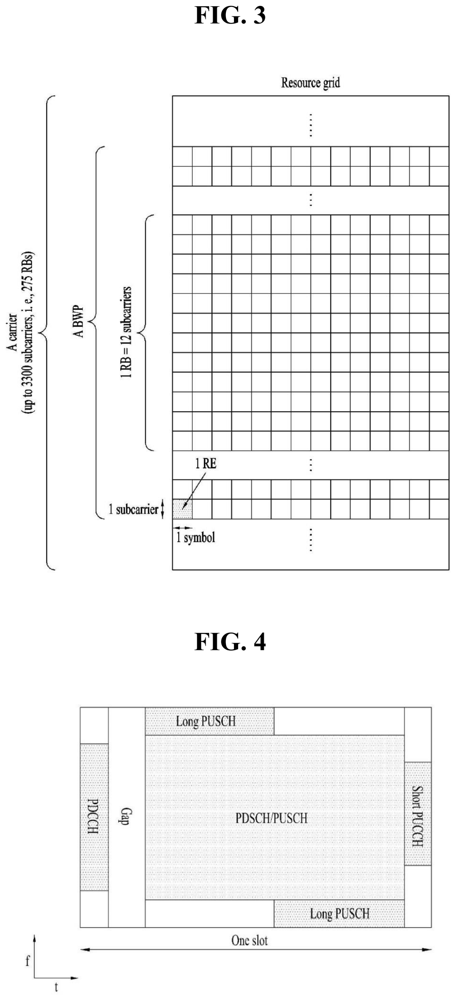

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

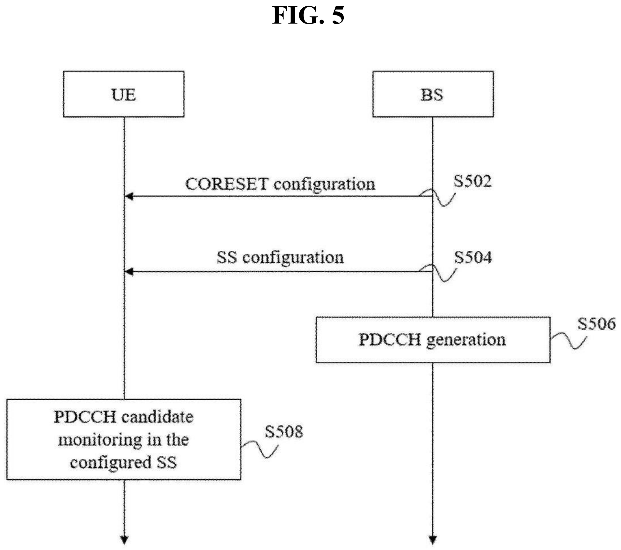

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.
- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.
- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.
- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

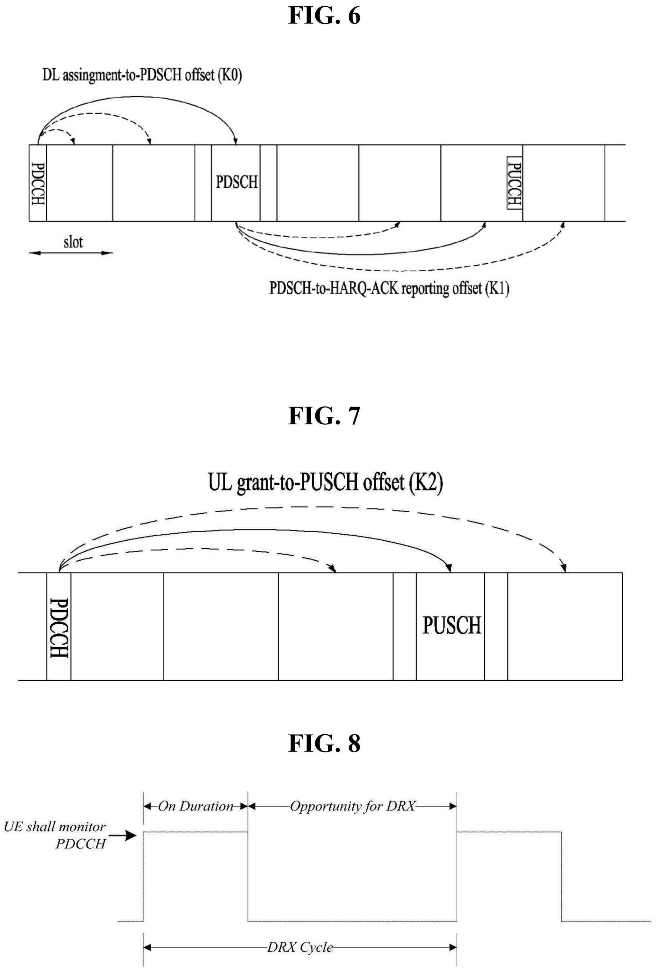

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.
- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.
- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.
1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:
- An SFN for the PF is determined by:
   (SFN + PF_offset) mod T = (T div N)*(UE_ID mod N)
- An index i_s indicating the index of the PO is determined by:
   i_s = floor(UE_ID/N) mod Ns

The following parameters may be used to calculate the PF and i_s above.
- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

### DRX (Discontinuous Reception)

### (1) RRC_CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

**[Table 5]**

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

### RRC_IDLE DRX

In the RRC _IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

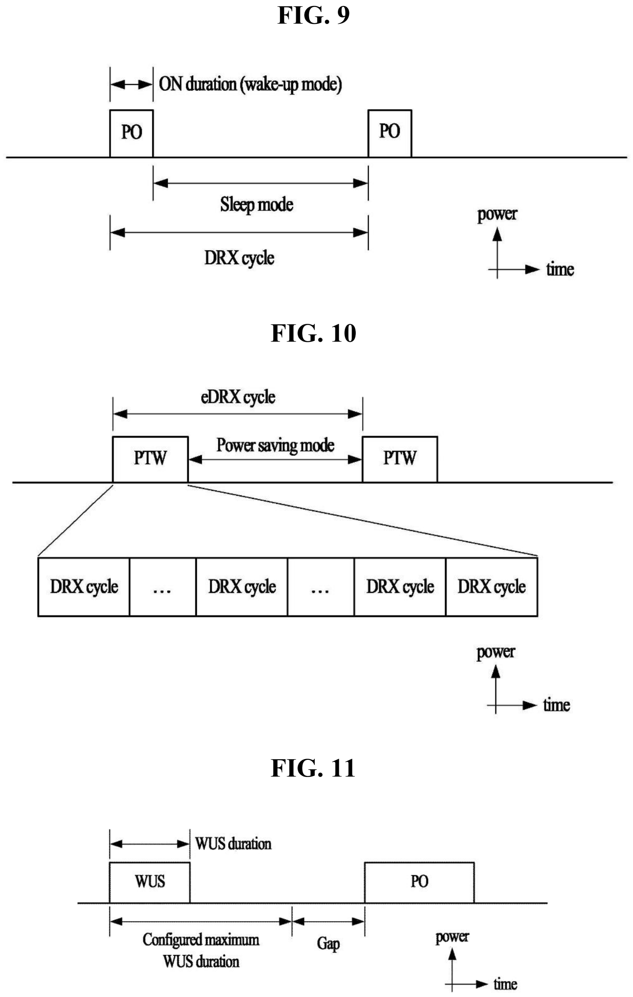

FIG. 9 illustrates an exemplary DRX cycle for paging.

Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

### WUS (Wake-up signal)/PEI (Paging Early Indication)

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

### LP-WUS configuration reception and activation

In the present disclosure, based on the terminology used in the standardization discussions related to a low-power wake-up signal (LP-WUS), a main radio is referred to as an MR, and a low-power wake-up receiver (LP-WUR) is referred to as an LR.

The MR refers to a general receiver for signal reception at a NR UE, and the MR may be used to receive NR OFDM signals, etc. In other words, the receiver of the UE in the current NR standard may be understood as the MR.

The LP-WUR refers to a receiver that is newly added to the UE to receive low-power signals, and through the LP-WUR, newly designed low-power signals such as an LP-WUS or lower power synchronization signal (LP-SS) may be received. The LP-WUR may have characteristics of lower cost and lower power consumption compared to the MR.

Specifically, according to the current NR standard, the UE needs to periodically wake up every DRX cycle, which contributes significantly to power consumption during periods without signal or information transmission. If the UE could wake up only when triggered (for example, to perform paging operation), the power consumption of the UE may be greatly reduced. To this end, the LP-WUS may be used to trigger the MR which is usually in sleep state for power saving, and the LP-WUS may be received by introducing the LR, which is a separate receiver capable of operating with ultra-low power consumption.

LR signals such as the LP-WUS or LP-SS may be configured/transmitted differently from MR signals in the time/frequency domain. For example, LR signals such as the LP-WUS/LP-SS may be modulated with on-off keying OOK. OOK-modulated LR signals are aligned to the boundaries of time resources (e.g., slots or symbols in the time domain), but may be transmitted without alignment to the boundaries of frequency resources (e.g., REs or subcarriers in the frequency domain). For example, the LP-WUS may be configured to represent the presence or absence (1/0) of a signal within a specific time duration, and the UE may receive the LP-WUS only through energy detection (or envelope detection) of the LP-WUS within the specific time duration.

The OOK symbol of the LP-WUS may be overlaid with i) a sequence for spectrum flattening, ii) an OFDM sequence for increasing transmission coverage, and/or iii) an OFDM sequence for additional information transmission. In the case of ii)/iii), the LR signal may be an OOK sequence detectable through envelope detection, and ON symbols of the sequence may consist of OFDM-modulated symbols. Particularly, in the case of iii), if OFDM demodulation is possible for the OFDM overlaid OOK sequence, additional meaningful information bits may be obtained.

The LR signal may be either a general OOK signal (without overlaid OFDM) or an OFDM overlaid OOK signal. The LP-WUR of the UE may be defined as two types.
- LP-WUR Type #1: A wake-up receiver capable of energy detection only
- LP-WUR Type #2: A wake-up receiver capable of OFDM sequence detection

LP-WUR Type #1 is a low-cost wake-up receiver capable of determining the presence or absence of a signal (energy detection or envelope detection) only. Therefore, LP-WUR Type #1 is a receiver capable of detecting only the OOK signal (e.g., a portion corresponding to the OOK signal excluding the overlaid OFDM in the general OOK signal or OFDM overlaid OOK signal).

Compared to Type #1, LP-WUR Type #2 is a higher-cost wake-up receiver capable of detecting the OFDM sequence as well as performing energy detection. Therefore, LP-WUR Type #2 is a receiver capable of detecting/decoding not only the general OOK signal without overlaid OFDM but also the OFDM overlaid OOK signal. Additionally, LP-WUR Type #2 may also be capable of receiving existing NR signals such as a PSS/SSS.

The UE needs to perform RRM measurement through the MR at a specific periodicity. If the RRM measurement through the MR is capable of being replaced with RRM measurement based on the LP-WUR, the power consumption of the UE may be significantly reduced. In other words, if the MR is capable of remaining in the power-off (or sleep) state for a longer duration without being activated to perform RRM measurement at a specific periodicity, it may be highly effective in reducing the power consumption of the UE.

Various candidates are discussed for the structure of an LR, and the power consumption of the LR may vary in an 'on' state and an 'off' state accordingly. Therefore, when the power consumption of the LR in the 'on' state is too high to be negligible or for other reasons, the UE may be required to activate or deactivate the LR.

Further, a procedure and operation for receiving a configuration for LP-WUS reception by a UE after its initial access to a serving cell may be defined. An operation required for receiving a configuration related to an LP-WUS and receiving the LP-WUS using an LR by a UE may be defined.

Since waking up an MR requires much energy and time, it is advantageous in terms of power saving of the UE to reduce the number of times the MR is woken up and a time period during which it operates after being woken up. To this end, after the UE initially accesses a cell, it may receive a configuration regarding whether the cell supports operations related to the LP-WUS, what procedure is used if supported, and time/frequency resources in which the LP-WUS is transmitted. An operation for receiving an indication of whether the LP-WUS is currently actually supported or whether the support is suspended in the cell by the UE after receiving the LP-WUS-related configuration may be defined.

The present disclosure proposes a configuration regarding whether a cell supports LP-WUS transmission and an operation of activating/deactivating LP-WUS reception in the cell, when a UE supports an operation that uses an LP-WUS (i.e., supports an LP-WUR).

The following description is given in the context of a periodic or receivable LP-WUS (and LP-SS), which is not to be construed as limiting the scope of the present disclosure. The present disclosure may be applied to all periodically provided signals. The application of the proposed methods is not limited to an NR system. In the following description, distinction is made between methods or options for the purpose of clarifying the description, and thus it should not be interpreted restrictively as meaning that each method or option should be necessarily be implemented as an independent invention. For example, the methods/options described below may be implemented individually, but at least some of them may also be implemented in combination, unless contradicting each other.

### [Proposal 1] Signaling of LP-WUS (and LP-SS)-Related Configuration Information in Serving Cell

Signaling of whether a current serving cell supports an LP-WUS-related operation and configuration information related to this, if supported, is proposed.

When a UE initially accesses or performs handover to a new cell, it receives system information of the cell. For this purpose, the UE receives a minimum information block (MIB and SIB1) using an MR. Other system information (OSI) may be broadcast periodically or transmitted specifically to the UE. When the UE supports an LR, the UE may receive a system information block (SIB) including a configuration related to LP-WUS transmission. For this purpose, a new SIB including a configuration related to LP-WUS transmission may be defined, and is simply referred to as an SIB_LP in the present disclosure.

In other words, when the UE supports the LR, it may receive the configuration related to LP-WUS transmission by receiving a related SIB (SIB_LP) in the OSI (broadcast or transmitted upon request) after receiving the MIB. The SIB_LP may include information about an LP-SS being a reference signal that may be received through the LP-WUR. For example, it may include waveform information about an LP-SS, information about time/frequency resources of the LP-SS, and so on. For example, the waveform information may include information indicating whether only an OOK signal is supported or an OFDM overlaid OOK signal is also supported, as the LP-SS(/WUS) signal. And/or, the waveform information may include information indicating whether the signal is an OOK signal or an OFDM overlaid OOK signal. Further, the UE may receive a configuration for an LP-WUS. Along with information about a waveform of the LP-WUS and information about time/frequency resources of the LP-WUS, information about activation/deactivation of the LP-WUS may be included. The information about activation/deactivation of the LP-WUS is related to activation/deactivation from the perspective of a BS/network, and may include, for example, information indicating that a cell supports the LP-WUS but is not currently supporting it.

A configuration related to the LP-SS may be determined independently of system information receivable through the MR. For example, when the UE initially accesses a new cell, it uses a synch raster in a search to receive an SSB transmitted in the cell. That is, candidate positions where the SSB may be transmitted are predetermined for the cell, and the UE may use them to detect an SSB transmission position and receive the SSB through the MR. Similarly, the UE may use information such as a predetermined synch raster to receive the LP-SS through the LR. Therefore, the UE may search for and receive the LP-SS through the LR in parallel with the process of detecting and receiving the SSB through the MR. Herein, synch raster information may be configured the same as or differently from that for the SSB. Alternatively, the transmission position of the LP-SS may be determined based on the SSB. When the UE accurately detects the position of the SSB, a relative possible transmission position of the LP-SS may be determined based on the position of the SSB, and the UE may receive the LP-SS using the LR.

The UE may receive information (e.g., time/frequency resources and a transmission periodicity of the LP-WUS) for receiving the LP-WUS through the SIB_LP as described above. The UE may receive the LP-SS based on a configuration received through the SIB_LP. Synchronization of the LR may be acquired by receiving the LP-SS, and synchronization information of the MR may be used as assistance. Based on this information, the UE may identify the transmission position and periodicity of the LP-WUS and receive the LP-WUS based on them. For example, when the UE is capable of obtaining the synchronization information for the LR with the assistance of the MR, the UE may be expected to receive the LP-WUS after a smaller number of LP-SS receptions or without any LP-SS reception.

Alternatively, the transmission of the LP-WUS may not be semi-static and may be changed by the BS. In this case, it may be considered that the UE obtains information related to the LP-WUS transmission from the LP-SS. That is, the SIB_LP may include transmission information for the LP-SS which may be semi-static, and the LP-SS may include information related to the LP-WUS. This may be for scheduling flexibility related to the LP-WUS at the BS.

### [Proposal 2] Activation/Deactivation of LP-WUS Reception by UE in IDLE/INACTIVE Mode

According to Proposal 1, the UE may receive a configuration for LP-WUS reception in a serving cell and operate accordingly, and an LP-WUS reception operation may be activated or deactivated based on a specific condition or indication. The LP-WUS reception operation may be activated/deactivated by the BS, by the UE, or by the UE's own decision if a specific condition is met.

For example, the UE in RRC IDLE/INACTIVE mode may autonomously determine whether to receive an LP-WUS provided by a cell. The network/BS may not know autonomous decisions made by the UE in the IDLE/INACTIVE mode, and thus the BS may have to consider both a PEI of the MR and the LP-WUS of the LR.

Although the UE may make a decision in RRC Connected mode as described later, the network/BS may also explicitly indicate to the UE whether to receive the LP-WUS. The autonomous decisions of the UE may also be reported to the network/BS.

An operation of activating/deactivating LP-WUS reception by the BS may be an operation of indicating whether the LP-WUS is transmitted in a cell. This is not a direct indication of whether to receive the LP-WUS to the IDLE/INACTIVE mode UE, but may be an operation of indicating to the UE that the LP-WUS is transmitted in the cell and that the UE may use it. Accordingly, the UE may determine whether to receive and use the LP-WUS based on the information. For example, the UE may receive the LP-WUS and determine the presence or absence of paging in a current DRX cycle, or may determine the presence or absence of paging by receiving a PEI without receiving the LP-WUS. Alternatively, the UE may wake up every DRX cycle and perform paging.

The activation/deactivation by the BS may be indicated by the SIB (SIB_LP) proposed in Proposal 1. The UE may identify whether the LP-WUS is supported in the cell through the SIB, and autonomously determine whether to receive the LP-WUS based on the identification. Therefore, a system information update for the UE may be required to indicate activation/deactivation of the LP-WUS at the BS. Alternatively, it may be indicated to the UE whether the UE may receive the LP-WUS in the current cell by dedicated RRC signaling.

The activation/deactivation by the BS may be signaled by information within a reference signal receivable by the LP-WUR. The UE may need to receive a reference signal (e.g., LP-SS) to acquire synchronization of the LR, and information about the LP-WUS activation/deactivation may be included in the reference signal. For example, when the UE receives a configuration related to the LP-SS, information about dynamic activation/deactivation may be included together. This may be an indication indicating deactivation of the LP-WUS which is normally transmitted in the cell, for a specific time period, for example, during a few system frames or a few DRX cycles. Or conversely, it may be an indication indicating activation of the LP-WUS which is not transmitted in the cell, for a specific time period. Alternatively, activation/deactivation of the LP-WUS may be explicitly indicated by whether the LP-WUS is transmitted or not in the cell.

Alternatively, the LP-WUS may include an indication of deactivation of a subsequent LP-WUS transmission. This reference signal-based or LP-WUS-based activation/deactivation indication may be more dynamic than an SIB-based or dedicated RRC-based indication. The UE may receive an indication indicating that there will be no subsequent LP-WUS transmission for a specific time period after a reception time of the LP-WUS, and determine whether to receive the LP-WUS later based on the information. This deactivation indication may be related to LP-WUS transmission in the entire cell or restricted to a UE or UE group (or subgroup) with a specific ID. This may vary depending on what information the LP-WUS contains. For example, the indication may be an indication indicating deactivation of the LP-WUS which is normally transmitted in the cell, for a specific time period, for example, during a few system frames or a few DRX cycles after the reception time. Based on this, the UE may reduce power consumption by turning off the LR during this time period.

Further, the LP-WUS transmission of the BS may be activated based on a request from the UE. It may be considered that the UE signals whether it supports the LP-WUR through a random access procedure. Through this, the BS may identify that there is a UE supporting the LP-WUR in the cell, and transmit or not transmit the LP-WUS according to a request of the UE for LP-WUS support.

The UE may determine whether to receive the LP-WUS in the cell according to a specific condition. The UE may determine the reception operation based on the coverage of the LP-WUS. Since the LR is generally designed with the goal of low cost and low power consumption, its coverage may be generally small relative to the MR. That is, when the UE has poor cell coverage, for example, at a cell edge, the UE may fully receive signals receivable by the MR, but have insufficient coverage for signals receivable by the LR. In this case, continuously receiving the LP-WUS using the LR may be a waste of power, and thus the LP-WUS reception operation may be discontinued. This criterion (or condition) may be set to discontinue the LP-WUS reception using the LR because the probability of fully receiving the LP-WUS is low even if the reception is repeated multiple times with the LR. The criterion may be determined based on the LP-SS or the LP-WUS. When the UE is unable to fully receive the LP-SS or the LP-WUS even after repeating the reception N times or more using the LR, it may deactivate the LR and perform the reception operation using only the MR. In this operation, an operation of reporting to the BS that it does not receive the LP-WUS may be performed additionally. This may be for the purpose of helping the BS determine whether to transmit the LP-WUS in the cell.

The LP-WUS reception operation using the LR at the UE may also be determined based on the state of the MR. The LP-WUS reception of the UE may be equivalent to turning the LR 'on', which may be determined according to whether the MR is on or sleeps. For example, when the UE turns the MR on, the LR may be automatically deactivated (off or sleep). This is because the primary function of the LR at the UE is to receive the LP-WUS and activate the MR, and thus the LR is deactivated to save power after successfully performing the operation. It may be considered that the MR may transition to an ultra-deep sleep state, only when the LR is in the 'on' state. This assumption may be desirable because when the MR is in the ultra-deep sleep state, the UE should receive the LP-WUS using the LR to activate the MR. To configure the LR to be deactivated even when the MR is in the ultra-deep sleep state, it may be considered that the MR is automatically activated after a specific time.

The LR may be activated and deactivated according to the transmission periodicity of the LP-WUS. When the LP-WUS is transmitted periodically, an operation of activating or deactivating the LR accordingly may be considered. To do this, a synchronization operation through LP-SS reception for a specific time period before and after a corresponding time may be required to obtain synchronization information for the LR.

### [Proposal 3] Activation/Deactivation of LP-WUS Reception by UE in CONNECTED Mode

For a UE in RRC_CONNECTED mode, the LP-WUS reception operation may be activated or deactivated based on a specific condition or an indication such as network signaling. When C-DRX is configured for the CONNECTED mode UE, the UE may receive an indication of DRX wake-up through the LP-WUS, and an indication of adjustment of PDCCH monitoring in the C-DRX.

The methods for indicating activation and deactivation of LP-WUS reception for an IDLE/INACTIVE mode UE proposed in Proposal 2, such as the SIB-based or RRC-based method and the LP-SS-based or LP-WUS-based method, may be used equally for an indication of activation and deactivation of LP-WUS reception for a connected mode UE. In addition to these methods, a dynamic indication through DCI may be available for the connected mode UE. Further, the activation and deactivation may be determined according to a different condition from that for the IDLE/INACTIVE mode.

The RRC_CONNECTED mode UE may not receive the LP-WUS after starting a DRX active time. In other words, the LR may be deactivated after starting the DRX active time. When the UE monitors the LP-WUS based on a duty cycle, the transmission periodicity of the LP-WUS may be equal to a configured C-DRX cycle. In this case, it may be assumed that the LP-WUS plays a role similar to the Rel-16 WUS which instructs the UE to start C-DRX. Therefore, it may be considered that a monitoring occasion for the LP-WUS is configured in alignment with the C-DRX cycle of the UE, and based on this, the UE activates the LR to receive the LP-WUS. When the connected mode UE is capable of using the MR to assist the synchronization of the LR, the UE does not need to receive an additional reference signal for synchronization, and a fast activation and deactivation operation may be possible.

The transmission periodicity of the LP-WUS may be set to be shorter than the C-DRX cycle. In this case, the UE may operate differently depending on whether an LP-WUS monitoring occasion is inside or outside the DRX active time. For example, the LP-WUS received at a monitoring occasion outside the DRX active time may be used to wake up C-DRX. Activation/deactivation of the LR in the DRX active time may be determined according to a configuration, and an operation performed by receiving the LP-WUS using the LR may differ accordingly. When the LR is activated even within the DRX active time, the LP-WUS monitorable within the active time may indicate PDCCH monitoring adaptation (monitoring adaptation) within the DRX active time.

It may be considered that the UE reports to the BS whether it has received the LP-WUS within the DRX active time. This may be to inform the BS that the UE is not in a situation where it is not capable of properly receiving the LP-WUS due to a coverage issue, by informing the BS that it has successfully received the LP-WUS.

The UE may report to the BS whether it will monitor the LP-WUS within the C-DRX active time. Through this, the BS may determine whether to indicate an operation based on the LP-WUS within the DRX active time to the UE.

A case where the UE continuously monitors the LP-WUS may be considered. In this case, the LP-WUS reception activation/deactivation indication available for the IDLE/INACTIVE mode UE may be used similarly. For example, the UE may receive an indication included in the LP-SS or LP-WUS, which indicates deactivation for a specific time period or until the next activation, or may activate/deactivate based on a specific condition.

Since the UE always monitors the LP-WUS, it may inform the BS through a report whether it will receive the LP-WUS (i.e., whether it will deactivate the LR) even within the C-DRX active time after starting the C-DRX active time. Based on the report of the UE, the BS may determine whether to transmit an indication through the LP-WUS to the UE. For example, when the UE reports that it will continue to receive the LP-WUS even after starting the C-DRX active time, the BS may transmit not only a PDCCH monitoring adaptation indication through DCI, but also a PDCCH monitoring adaptation indication through the LP-WUS. When the UE reports that it will not receive the LP-WUS (i.e., will deactivate the LR) after starting the C-DRX active time, the BS may only transmit the indication through the DCI.

The operation of deactivating the LR based on a specific condition without a UE report may be configured. For example, the UE may be configured to automatically deactivate the LR after starting C-DRX. This may be because the LP-WUS is used as a signal to wake up the DRX active time of the UE. Alternatively, it may be considered that the LR is deactivated after a specific time from the start of the C-DRX active time, or the LR is activated a specific time before the end of the DRX active time.

It may be considered that the BS indicates activation of LP-WUS reception to the UE by DCI, dedicated RRC, or the LP-WUS. This indication means that the LP-WUS is transmitted in a corresponding cell, and thus the UE may determine to receive it. These indications may be configured in a similar format to the indication for the IDLE/INACTIVE mode in Proposal 2.

### [Proposal 4] Determination of Whether to Activate LP-WUS Reception Based on Low-Power Signal

A method for using a low-power signal to determine activation of LP-WUS reception is proposed. The low-power signal refers to a signal receivable by the LR, such as the LP-WUS and the LP-SS.

To determine whether to activate LP-WUS reception by transitioning the MR to the ultra-deep sleep state and operating the LR, the UE may measure cell quality by receiving the LP-SS through the MR. That is, the UE may introduce an operation of receiving and measuring the LP-SS through the MR to determine whether the reception coverage of the LP-WUS is sufficiently good.

The UE may determine to activate the LP-WUS as follows. The UE receives the SSB and measures the cell quality through the MR, as before. When the result value satisfies a condition, the UE receives the LP-SS through the MR and measures the cell quality. This may be to determine whether the coverage of the LP-SS and LP-WUS received through the LR, which the UE actually operates when LP-WUS reception is activated, is sufficient for smooth reception. Subsequently, when the MR transitions to the ultra-deep sleep state, the UE performs RRM measurement by receiving the LP-SS through the LR to satisfy a requirement.

The BS may indirectly indicate how the UE is to operate through a threshold for the LP-WUS activation determination condition. For example, when the threshold is a value that may be sufficiently achieved based on the current condition of the UE, LP-WUS reception is automatically activated when the UE satisfies the condition set by the BS. When the BS sets the threshold to a value that the UE is not capable of achieving, the UE may keep LP-WUS reception deactivated until it receives a separate indication from the BS.

The UE may request activation of LP-WUS transmission from the BS. For example, an inactive mode UE may use small data transmission (SDT), or an idle mode UE may perform a random access channel (RACH) to activate LP-WUS transmission through a separate preamble, similar to requesting an on-demand SIB.

Through the proposed method, the UE does not have to wait for the next SSB transmission to satisfy the RRM measurement requirement, and may instead perform measurements in the LP-SS to transition the MR to the ultra-deep sleep state faster, which may be beneficial for the power consumption of the UE.

The proposed method may also be used, when the MR and LR are operating simultaneously. For example, LP-SS-based measurement performed by the LR may be carried out in parallel to the SSB-based measurement performed by the MR to satisfy the RRM measurement requirement. This may depend on power consumption for the LR activation. That is, when the LR may operate with sufficiently low power, the parallel RRM measurement using the LR may be advantageous for the UE operation.

### [Proposal 5] Determination of Whether to Activate LP-WUS Reception Based on MR Operation

The LR activation for LP-WUS reception may be determined based on the operation of the MR. When the MR is not activated (e.g., in the sleep state), LP-WUS reception may always be activated and performed. This may be done for the UE with the LR to receive the LP-WUS through the LR and trigger activation of the MR (a wake-up indication), when the MR is deactivated. When the MR is activated, LP-WUS reception may be deactivated.

Even when the MR is activated, LP-WUS reception may be activated. This may be an operation for the UE to receive a dynamic indication through the LP-WUS, even when operating the MR and monitoring a PDCCH. For this purpose, a monitoring occasion for receiving the LP-WUS may be configured such that the LP-WUS reception operation is performed periodically.

For an LR capable of receiving an OFDM sequence (e.g., OFDM overlaid sequence), it may be configured that when the MR is activated, only an operation of receiving the OFDM sequence (e.g., OFDM sequence detection) is deactivated, and an operation of receiving an OOK signal (e.g., energy detection) is performed. These operations may be performed sequentially based on a timer, and the operation of receiving the OOK signal may also be terminated/deactivated after the timer expires.

For example, activation/deactivation of LP-WUS reception may be determined in relation to a DRX timer (e.g., DRX timer for an MR operation) of the UE. Activation of the MR of the UE configured with C-DRX may be based on a DRX active time, and activation/deactivation of LP-WUS reception may be determined by an associated DRX timer.

Referring to the current NR standard document TS 38.321, the DRX active time of the UE is defined as in Table 6.

**[Table 6]**

| |
|---|
| When DRX is configured, the Active Time for Serving Cells in a DRX group includes the time while: |
| - drx-onDurationTimer or drx-InactivityTimer configured for the DRX group is running; or |
| - drx-RetransmissionTimerDL, drx-RetransmissionTimerUL or drx-RetransmissionTimerSL is running on any Serving Cell in the DRX group; or |
| - ra-ContentionResolutionTimer (as described in clause 5.1.5) or msgB-ResponseWindow (as described in clause 5.1.4a) is running; or |
| - a Scheduling Request is sent on PUCCH and is pending (as described in clause 5.4.4 or 5.22.1.5). If this Serving Cell is part of a non-terrestrial network, the Active Time is started after the Scheduling Request transmission that is performed when the SR_COUNTER is 0 for all the SR configurations with pending SR(s) plus the UE-gNB RTT; or |
| - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). |

When a drx-onDurationTimer and a drx-InactivityTimer are running, LP-WUS reception may be deactivated. Since the drx-onDurationTimer and the drx-InactivityTimer are timers that run when the UE first starts DRX and after receiving DCI indicating a new transmission, the UE may not control PDCCH monitoring of the MR through LP-WUS reception. For example, when these timers are running, the UE may fully perform PDCCH monitoring through the MR.

For example, when a retransmission timer for the MR (e.g., drx-RetransmissionTimerDL, drx-RetransmissionTimerUL, or drx-RetransmissionTimerSL) is running, LP-WUS reception may be activated. When LP-WUS reception is activated and the retransmission timer is running, the UE may monitor a PDCCH only in some SS sets, not all SS sets. The UE may operate with reduced power consumption by monitoring only some SS sets related to retransmission in this manner, and when receiving the LP-WUS, activate monitoring in (another) SS set in which DCI related to a new transmission may be received. The operation of activating monitoring in such (another) SS set may be related to SSSG switching. For example, the UE may be configured/instructed to monitor an SS set belonging to SSSG1 when the retransmission timer is running, and to monitor an SS set belonging to SSSG2 when the LP-WUS is received. When the retransmission timer is running, LP-WUS reception may also be deactivated. This may be the same as the operation of deactivating LP-WUS reception, when the drx-onDurationTimer and drx-InactivityTimer are running.

Even when a ra-ContentionResolutionTimer and msgB-ResponseWindow related to random access are running, the UE may operate in the same manner as the UE operation related to the retransmission timer described above. For example, when a random access timer is running, LP-WUS reception may be activated for the UE. Herein, the UE may only monitor some SS sets in which messages related to random access (e.g., msg2, msg4, and msgB) are expected to be received through the MR, and upon receipt of the LP-WUS, activate monitoring in the other SS sets. When the retransmission timer is running, LP-WUS reception may also be deactivated. This may be the same as the operation of deactivating LP-WUS reception, when another DRX timer is running.

For example, LP-WUS reception may be activated/deactivated based on UL transmission on the MR of the UE. When a scheduling request (SR) transmission of the UE is pending and it is determined to be a DRX active time, the MR of the UE may be activated and LP-WUS reception may be deactivated. When the UE has transmitted a CG PUSCH, whether it is a DRX active time may be determined based on the retransmission timer, and the UE may operate in the same manner as the UE operation described before in relation to the retransmission timer.

According to the present disclosure, the UE may receive information about whether a corresponding cell supports an LP-WUS, and may be configured with a related operation. The UE may be configured with the presence or absence of LP-WUS reception in the cell and a subsequent operation based on it, according to an indication/configuration from the BS. The UE may also receive the LP-WUS or be configured with an associated operation according to a specific condition, and perform the operation accordingly.

The above description may be briefly summarized as follows. The introduction of an LR is under discussion as a technique for power saving of a UE, and since the LR operates with lower power than an MR, it may be expected that its coverage will be smaller. Activation/deactivation of the LR needs to be controlled considering the coverage of the LR. Regarding the activation/deactivation of the LR, the following has been described: i) network signaling of whether the LP-WUS (and LP-SS) is supported from the perspective of the network, and an LP-WUS(and LP-SS)-related configuration, ii) LP-WUS activation/deactivation for an RRC IDLE/INACTIVE UE, and iii) LP-WUS activation/deactivation for an RRC CONNECTED UE, and additionally, a method for determining LP-WUS activation based on a low-power signal has been described.

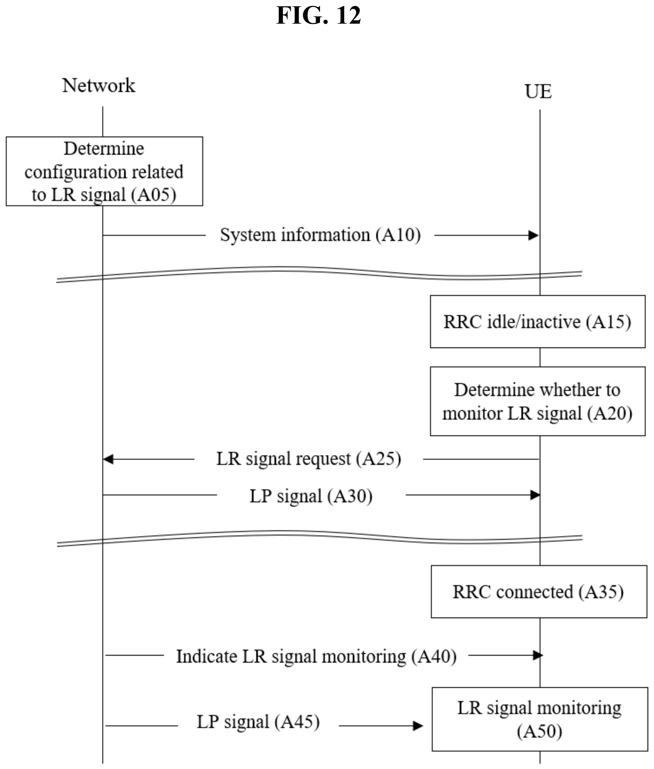

FIG. 12 is a diagram illustrating operations of a network and a UE according to an embodiment.

Referring to FIG. 12, the network may determine a configuration related to an LR signal receivable with lower power than an MR signal at the UE (A05). The configuration related to the LR signal may include at least one of information about time and frequency resources of the LR signal or information about activation/deactivation of the LR signal, and information about a waveform of the LR signal. The LR signal may include at least one of an LP WUS or an LP SS. The LP SS may be configured differently from an MR SS. For example, the LP SS may be determined based on a position of an SSB including the MR SS. The network may transmit the configuration related to the LR signal through system information (A10). The UE may receive the system information through the MR.

The UE may determine whether to monitor the LR signal in RRC inactive/idle mode (A15). The UE may autonomously determine whether to monitor the LR signal based on the system information (A10) that includes the configuration related to the LR signal (A20). For example, the UE may determine whether to monitor the LR signal based on measured quality of the MR signal. The measurement of the MR signal may include a measurement in at least one of the MR SS or the LR SS. Based on determining to monitor the LR signal, the UE may request the network to transmit the LR signal (A25). For example, the LR signal transmission may be requested through a random access procedure. The network may transmit the LR signal based on the request of the UE (A30). Although FIG. 12 illustrates an example in which the LR signal transmission (A30) is performed based on the request of the UE (A25) (e.g., random access), the transmission/reception/monitoring of the LR signal may be performed without the request of the UE (A25) according to an embodiment, and in this case, the request of the UE (A25) and the LR signal transmission process (A30) provided based on the request illustrated in FIG. 12 may be omitted/changed.

While the UE operates in RRC connected mode (A35), the network may transmit information about whether the UE should monitor the LR signal (A40). The network may transmit the LR signal to the UE (A45). The UE may monitor the LR signal based on the indication from the network (A50).

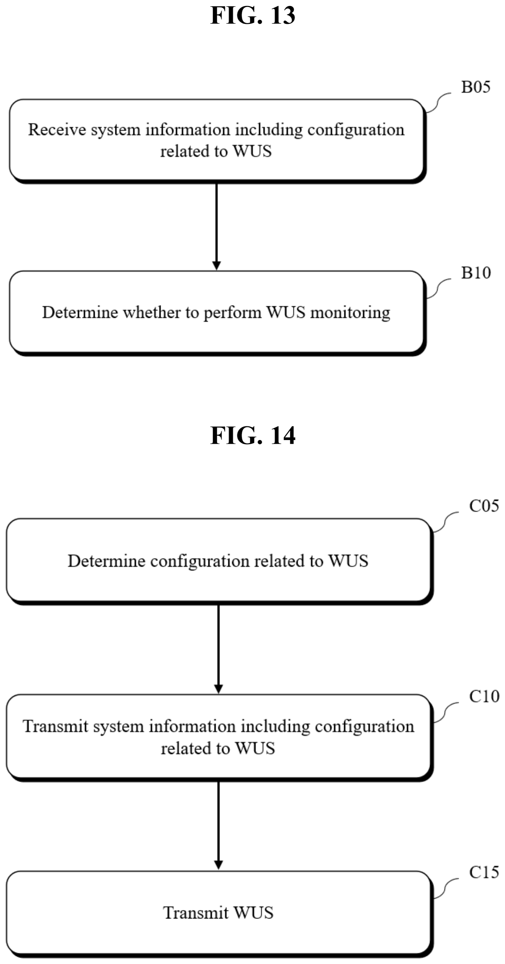

FIG. 13 is a flowchart illustrating a method of receiving a signal by a UE in a wireless communication system according to an embodiment.

Referring to FIG. 13, the UE may receive system information including a configuration related to a WUS through a first reception operation (B05)

The UE may determine whether to perform monitoring of the WUS through a second reception operation consuming lower power than the first reception operation, based on the system information (B10).

The configuration related to the WUS may include information about a waveform of the WUS.

The configuration related to the WUS may include at least one of information about time and frequency resources of the WUS or information about activation/deactivation of the WUS.

The system information may further include a configuration related to a second synchronization signal for synchronization in the second reception operation.

The second synchronization signal may be configured differently from a first synchronization signal for synchronization in the first reception operation.

A position of the second synchronization signal may be determined based on a position of an SSB including the first synchronization signal.

Based on operating in an RRC idle/inactive state, the UE may autonomously determine whether to perform monitoring of the WUS.

The UE may perform a random access procedure to request transmission of the WUS to a network, based on determining to perform monitoring of the WUS.

Whether the UE has to monitor the WUS during an RRC connected state, may be explicitly configured through network signaling.

Whether to monitor the WUS through the second reception operation may be determined, based on quality of a signal measured through the first reception operation.

The signal measured through the first reception operation may include at least one of a first synchronization signal for synchronization in the first reception operation or a second synchronization signal for synchronization in the second reception operation.

FIG. 14 is a flowchart illustrating a method of transmitting a signal by a BS in a wireless communication system according to an embodiment.

Referring to FIG. 14, the BS may determine a configuration related to a WUS for supporting a second reception operation that consumes lower power than a first reception operation of a UE (C05).

The BS may transmit system information including the configuration related to the WUS (C10).

The BS may transmit the WUS based on the configuration related to the WUS (C15).

The configuration related to the WUS may include information about a waveform of the WUS.

The configuration related to the WUS may include at least one of information about time and frequency resources of the WUS or information about activation/deactivation of the WUS.

The system information may further include a configuration related to a second synchronization signal for synchronization in the second reception operation.

The second synchronization signal may be configured differently from a first synchronization signal for synchronization in the first reception operation.

A position of the second synchronization signal may be determined based on a position of an SSB including the first synchronization signal.

Whether the UE has to monitor the WUS during an RRC connected state, may be explicitly configured through network signaling.

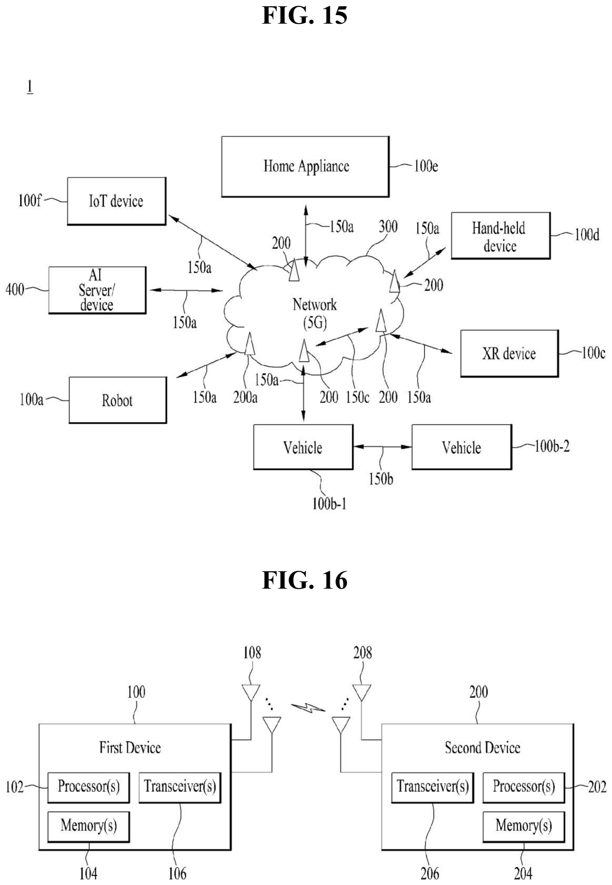

FIG. 15 illustrates a communication system 1 applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The receiver included in the transceiver(s) 206 may include a first receiver (MR) supporting a first type waveform (e.g., OFDM) and a second receiver (LR) supporting a second type waveform (e.g., OOK). The second receiver may consume less power than the first receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

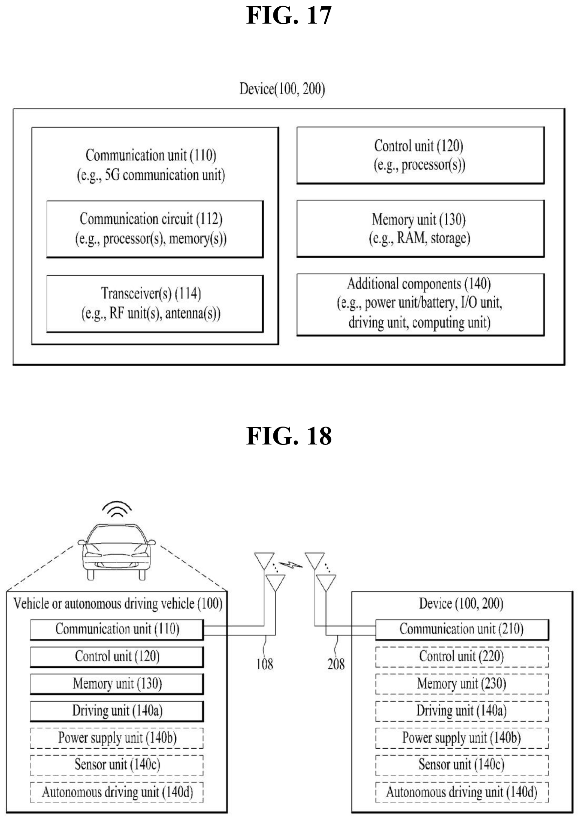

FIG. 17 illustrates another example of a wireless device applied to the present disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method of receiving a signal by a user equipment (UE) in a wireless communication system, the method comprising:
receiving system information including a configuration related to a wake-up signal (WUS) through a first reception operation; and
determining whether to perform monitoring of the WUS through a second reception operation consuming lower power than the first reception operation, based on the system information,
wherein the configuration related to the WUS includes information about a waveform of the WUS.

2. The method of claim 1, wherein the configuration related to the WUS includes at least one of information about time and frequency resources of the WUS or information about activation/deactivation of the WUS.

3. The method of claim 1, wherein the system information further includes a configuration related to a second synchronization signal for synchronization in the second reception operation, and
wherein the second synchronization signal is configured differently from a first synchronization signal for synchronization in the first reception operation.

4. The method of claim 3, wherein a position of the second synchronization signal is determined based on a position of a synchronization signal block (SSB) including the first synchronization signal.

5. The method of claim 1, wherein based on operating in a radio resource control (RRC) idle/inactive state, the UE autonomously determines whether to perform monitoring of the WUS.

6. The method of claim 5, further comprising performing a random access procedure to request transmission of the WUS to a network, based on determining to perform monitoring of the WUS.

7. The method of claim 5, wherein whether the UE has to monitor the WUS during an RRC connected state, is explicitly configured through network signaling.

8. The method of claim 1, wherein whether to monitor the WUS through the second reception operation is determined, based on quality of a signal measured through the first reception operation.

9. The method of claim 1, wherein the signal measured through the first reception operation includes at least one of a first synchronization signal for synchronization in the first reception operation or a second synchronization signal for synchronization in the second reception operation.

10. A computer-readable recording medium having a program recorded thereon for performing the method of claim 1.

11. An apparatus for wireless communication, comprising:
a memory configured to store instructions; and
a processor configured to perform operations by executing the instructions,
wherein the operations of the processor include:
receiving system information including a configuration related to a wake-up signal (WUS) through a first reception operation; and
determining whether to perform monitoring of the WUS through a second reception operation consuming lower power than the first reception operation, based on the system information, and
wherein the configuration related to the WUS includes information about a waveform of the WUS.

12. The apparatus of claim 11, further comprising:
a first receiver configured to perform the first reception operation; and
a second receiver configured to perform the second reception operation.

13. The apparatus of claim 11, wherein the apparatus is a user equipment (UE) operating in a wireless communication system or a processing device controlling the UE.

14. A method of transmitting a signal by a base station (BS) in a wireless communication system, the method comprising:
determining a configuration related to a wake-up signal (WUS) for supporting a second reception operation consuming lower power than a first reception operation of a user equipment (UE);
transmitting system information including the configuration related to the WUS; and
transmitting the WUS based on the configuration related to the WUS,
wherein the configuration related to the WUS includes information about a waveform of the WUS.

15. A base station (BS) for wireless communication, comprising:
a memory configured to store instructions; and
a processor configured to perform operations by executing the instructions,
wherein the operations of the processor include:
determining a configuration related to a wake-up signal (WUS) for supporting a second reception operation consuming lower power than a first reception operation of a user equipment (UE);
transmitting system information including the configuration related to the WUS; and
transmitting the WUS based on the configuration related to the WUS, and
wherein the configuration related to the WUS includes information about a waveform of the WUS.
